# EUROPÄISCHE PATENTSCHRIFT

(11) **EP 2 741 963 B1**
(45) Veröffentlichungstag und Bekanntmachung des Hinweises auf die Patenterteilung: **01.07.2015**
(21) Anmeldenummer: 12733702.0
(22) Anmeldetag: 06.07.2012
(51) Int. Cl.: B65B 23/00, B65B 5/10, B65B 59/00, A61J 3/00, B65B 63/00, B65B 11/52, B41F 17/36

(54) **EINRICHTUNG ZUM HALTEN UND POSITIONIEREN VON ALS TABLETTEN, HARTGELATINEKAPSELN ODER ÄHNLICHEM AUSGEBILDETEN PHARMAZEUTISCHEN PRODUKTEN IN EINER VERPACKUNGSANLAGE**
APPARATUS BY MEANS OF WHICH PHARMACEUTICAL PRODUCTS IN THE FORM OF TABLETS, HARD GELATIN CAPSULES OR THE LIKE ARE RETAINED, AND POSITIONED, IN A PACKAGING INSTALLATION
ÉQUIPEMENT DESTINÉ À MAINTENIR ET POSITIONNER DES PRODUITS PHARMACEUTIQUES PRENANT LA FORME DE COMPRIMÉS, DE CAPSULES DE GÉLATINE DURE OU SIMILAIRES DANS UNE INSTALLATION DE CONDITIONNEMENT

(30) Priorität: 10.08.2011 DE 102011080746
(43) Veröffentlichungstag der Anmeldung: 18.06.2014
(73) Patentinhaber: Robert Bosch GmbH, 70442 Stuttgart (DE)
(72) Erfinder: FRANCK, Thomas, 73547 Lorch-Weitmars (DE); MIHALEK, Thomas, 73660 Urbach (DE)
(86) Internationale Anmeldenummer: PCT/EP2012/063324
(87) Internationale Veröffentlichungsnummer: WO 2013/020763

(56) Entgegenhaltungen:
- US-A- 3 090 296
- US-A- 4 069 753
- US-A- 5 979 309

## Beschreibung

### Stand der Technik

Die Erfindung betrifft eine Einrichtung zum Halten und Positionieren von als Tabletten, Hartgelatinekapseln oder ähnlichem ausgebildeten pharmazeutischen Produkten in einer Verpackungsanlage nach dem Oberbegriff des Anspruchs 1.

Eine derartige Einrichtung ist aus der DE 10 2008 013 403 A1 als Bestandteil einer Kapselfüll- und Verschließmaschine bekannt. Die bekannte Einrichtung weist hierzu zwei miteinander zusammenwirkende Aufnahmeelemente für beispielsweise jeweils fünf Hartgelatinekapseln auf, die dazu dienen, zunächst die Kapseloberteile von den Kapselunterteilen zu trennen, anschließend in die oben offenen Kapselunterteile das pulverförmige Füllgut zu dosieren, und zuletzt die Aufnahmeelemente für die Kapseloberteile wieder in Deckung mit den Aufnahmeelementen für die Kapselunterteile zu bringen, um die Hartgelatinekapseln zu verschließen. Die Aufnahmeelemente für die Kapselunterteile der Einrichtung weisen für jedes Kapselunterteil jeweils eine Aufnahme in Form einer Durchgangsöffnung auf, so dass die Kapselunterteile beispielsweise klemmend in den Aufnahmen positioniert sind. Das Ausschieben der Kapselunterteile aus den Aufnahmen erfolgt durch Ausschubstößel, die von unten in die Durchgangsöffnungen eingefahren werden, und die in Wirkverbindung mit den Kapselunterteilen geraten und bei einer Aufwärtsbewegung der Ausschubstößel die Kapselunterteile bzw. die verschlossenen Hartgelatinekapseln aus den Aufnahmen der Aufnahmeelemente ausstoßen. Eine klemmende Positionierung der pharmazeutischen Produkte in den Aufnahmen der Einrichtung ist ohne Beschädigung der Produkte nur möglich, wenn diese, wie beim Fall von Hartgelatinekapseln, eine gewisse Elastizität aufweisen, so dass ein Klemmschluss in den Aufnahmen ermöglicht wird. Eine klemmende Positionierung bzw. ein Halten von pharmazeuti-schen Produkten, welche nicht elastisch ausgebildet sind und somit durch Klemmen fixierbar sind, ist mit der bekannten Einrichtung jedoch nicht möglich. Ein typischer Anwendungsfall einer derartigen Einrichtung betrifft das Beschriften von Tabletten, wozu die Tabletten in einer gewissen Position bzw. Stellung während des Beschriftungsvorgangs fixiert werden müssen, um die Beschriftung beispielsweise mit einem Laser oder ähnlichem vornehmen zu können.

Aus der US 3,090,296 ist bereits eine Einrichtung zum Halten und Positionieren von Tabletten mit einem Trägerelement bekannt, das formatabhängig Aufnahmen aufweist.

### Offenbarung der Erfindung

Ausgehend von dem dargestellten Stand der Technik liegt der Erfindung die Aufgabe zugrunde, eine Einrichtung zum Halten und Positionieren von pharmazeutischen Produkten nach dem Oberbegriff des Anspruchs 1 derart weiterzubilden, dass ein Halten bzw. ein Positionieren auch von elastisch nicht verformbaren pharmazeutischen Produkten, insbesondere von Tabletten, ermöglicht wird. Diese Aufgabe wird bei einer Einrichtung zum Halten und Positionieren von pharmazeutischen Produkten mit den Merkmalen des Anspruchs 1 erfindungsgemäß dadurch gelöst, dass in Wirkverbindung mit einem die Produkte aufnehmenden Trägerelement ein Halteelement vorgesehen ist, das für jedes Produkt in Ausrichtung mit der jeweiligen Aufnahme für das Produkt jeweils ein Klemmelement aufweist, und dass das Halteelement in Bezug zum Trägerelement zwischen zwei Stellungen beweglich angeordnet ist, derart, dass in einer ersten Stellung zum Ein- und Ausschleusen der Produkte in bzw. aus den Aufnahmen die Klemmelemente außer Kontakt mit den Produkten sind, und dass in einer zweiten Stellung die Klemmelemente die Produkte in den Aufnahmen fixieren.

Vorteilhafte Weiterbildungen der erfindungsgemäßen Einrichtung zum Halten und Positionieren von pharmazeutischen Produkten in einer Verpackungsanlage sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

Um einerseits in einer Einrichtung eine möglichst große Anzahl von pharmazeutischen Produkten (beispielsweise 160 Tabletten) transportieren zu können, und andererseits die Klemmelemente möglichst einfach und kostengünstig herstellen zu können, ist es in einer besonders bevorzugten konstruktiven Ausgestaltung der Erfindung vorgesehen, dass das Halteelement als Halteplatte ausgebildet ist, und dass die Klemmelemente als einstückig mit der Halteplatte verbundene, durch Ausfräsungen oder ähnlichem ausgebildete Klemmabschnitte in der Halteplatte ausgebildet sind.

Um insbesondere die Klemmelemente vor äußeren Eingriffen zu schützen, kann es in einer weiteren Ausgestaltung der zuletzt genannten Variante vorgesehen sein, dass die Halteplatte auf der dem Trägerelement abgewandten Seite von einer Deckplatte überdeckt ist, die mit dem Trägerelement zumindest mittelbar verbunden ist, und dass in der Deckplatte in Ausrichtung mit den Aufnahmen Durchbrüche für die Produkte ausgebildet sind, die die Produkte bevorzugt mit Abstand umgeben.

Um eine relativ einfache Anpassung an verschiedene Formate der pharmazeutischen Produkte vornehmen zu können, ist es darüber hinaus in vorteilhafter Weise vorgesehen, dass die formatabhängigen Aufnahmen in Formatleisten ausgebildet sind, die in Aufnahmen des Trägerelements einsetzbar sind

Beispielsweise nach dem Beschriften der pharmazeutischen Produkte ist es erforderlich, die pharmazeutischen Produkte für weitere Bearbeitungsschritte, z.B. zum Verpacken in Blisterpackungen oder ähnlichem, aus den Aufnahmen des Trägerelements möglichst einfach, produktschonend und zuverlässig ausschleusen zu können. Hierzu ist es in einer weiteren Ausgestaltung der Erfindung vorgesehen, dass die Aufnahmen Durchbrüche bzw. Durchgangsbohrungen aufweisen, und dass in die Durchbrüche bzw. Durchgangsbohrungen Ausschubstößeln einführbar sind, die im Bereich einer Anschlussstation der Verpackungsanlage angeordnet sind, und dabei die Produkte aus den Aufnahmen ausschieben.

Wichtig ist es auch, dass es vermieden wird, dass die pharmazeutischen Produkte auf ihrem Transportweg innerhalb der Verpackungsanlage zwischen den einzelnen Bearbeitungsstationen unbeabsichtigt aus den Aufnahmen des Trägerelements herausgenommen werden bzw. herausfallen. Daher ist es in einer weiteren Variante der Erfindung vorgesehen, dass das Halteelement mit einem Federelement zusammenwirkt, dass das Halteelement in Richtung der zweiten Stellung kraftbeaufschlagt, so dass die pharmazeutischen Produkte sicher in den Aufnahmen fixiert sind.

Um das Entfernen der pharmazeutischen Produkte aus den Aufnahmen des Trägerelements bewirken zu können, ist es erforderlich, dass das Halteelement (Halteplatte) nicht mehr in Wirkverbindung mit den pharmazeutischen Produkten angeordnet ist. Da, wie eben erläutert, die Halteplatte mit einem Federelement kraftbeaufschlagt ist, die die pharmazeutischen Produkte in den Aufnahmen festhält, ist es daher vorgesehen, dass das Halteelement mit einem Übertragungselement zusammenwirkt, mittels dem das Halteelement in die erste Stellung bewegbar ist.

Ganz besonders bevorzugt ist es dabei vorgesehen, dass das Übertragungselement mit einem im Bereich der Verpackungsanlage angeordneten, vorzugsweise ortsfesten Gegenelement zusammenwirkt. Ein derartiges Gegenelement kann beispielsweise in Form einer einfach gestalteten Schiene vorgesehen sein, die beim Vorbeibewegen des Trägerelements an der Schiene in Wirkverbindung mit dem Halteelement gelangt und dieses dabei in die erste Stellung verschiebt.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Ausschnitt aus einer Verpackungsanlage im Bereich einer erfindungsgemäßen Einrichtung zum Halten und Positionieren von Tabletten,
- Fig. 2: eine bei einer Einrichtung gemäß Fig. 1 verwendete Halteplatte für Tabletten in perspektivischer Ansicht,
- Fig. 3: die Einrichtung gemäß Fig. 1 in einem Längsschnitt, bei der die Tabletten in die Einrichtung eingeschleust bzw. ausgeschleust werden,
- Fig. 4: einen Schnitt entsprechend der Fig. 3 in einem gespannten Zustand der Halteplatte,

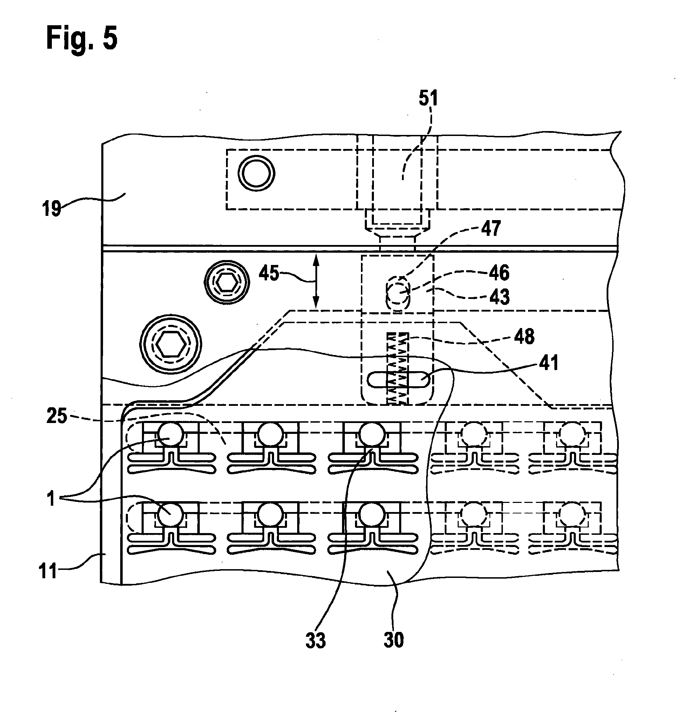

- Fig. 5: eine Draufsicht auf die Einrichtung gemäß Fig. 4 im Bereich des Trägerelements und
- Fig. 6: eine in einer Aufnahmeaufgenommene Tablette in einer Schnittdarstellung.

Gleiche Bauteile bzw. Bauteile mit gleicher Funktion sind in den Figuren mit den gleichen Bezugsziffern versehen.

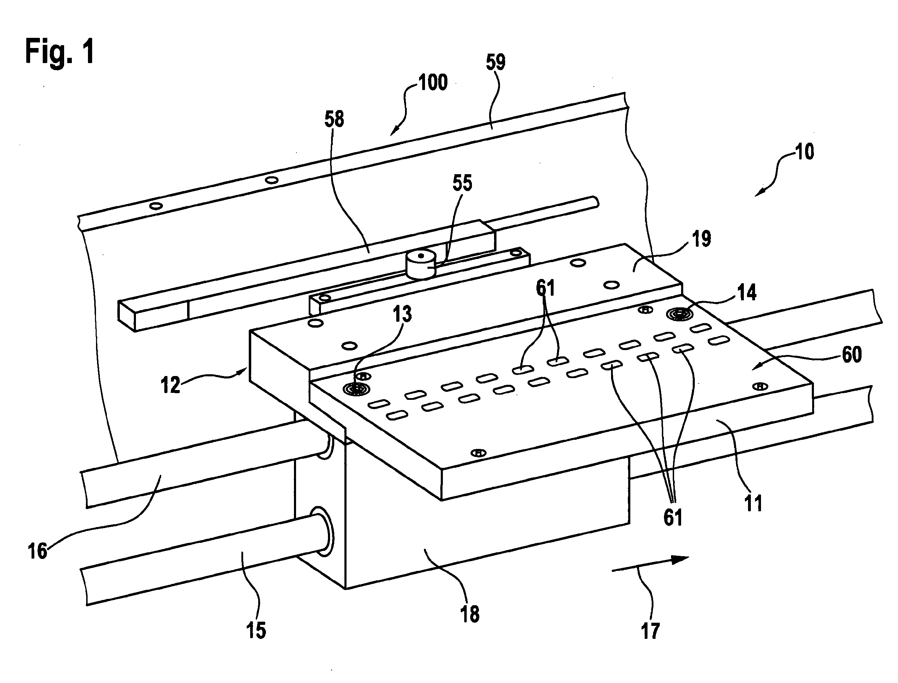

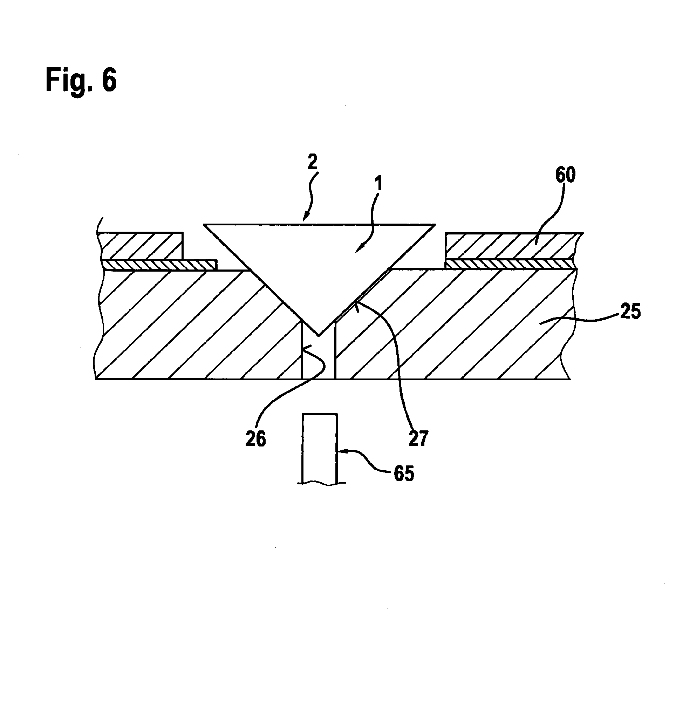

In den Fig. 1 ist eine Einrichtung 10 zum Halten und Positionieren von als Tabletten 1, Hartgelatinekapseln oder ähnlichen ausgebildeten pharmazeutischen Produkten in einer Verpackungsanlage 100 dargestellt. Mittels der Einrichtung 10 sollen die Tabletten 1 insbesondere zum Markieren bzw. Beschriften ihrer einen Seitenfläche 2 im Bereich einer nicht dargestellten Beschriftungsstation gehalten und positioniert werden (Fig. 6). Die Tabletten 1 sind hierzu im Ausführungsbeispiel dreiecksförmig mit konstanter Höhe ausgebildet, sie können jedoch auch eine andere Form aufweisen. Wesentlich ist lediglich, dass die Tabletten 1 im Bereich der angesprochenen Beschriftungsstation mittels der Einrichtung 10 derart positioniert und gehalten werden, dass die Beschriftungsstation die Tabletten 1 an der dafür vorgesehenen Stelle der Seitenfläche 2 positionsgenau markieren kann.

Die Einrichtung 10 weist ein im Wesentlichen plattenförmiges Trägerelement 11 auf, das an einem Schlitten 12 im Ausführungsbeispiel mittels zweier Schrauben 13, 14 austauschbar befestigt ist. Der Schlitten 12 als Teil einer Fördereinrichtung der Verpackungsanlage 100 ist in zwei Führungsstangen 15, 16 geführt, derart, dass der Schlitten 12 mittels nicht dargestellter Antriebsmittel beispielhaft in Richtung des Pfeils 17 insbesondere getaktet gefördert wird. Der Schlitten 12 besteht, wie insbesondere aus einer Zusammenschau der Fig. 1 bis 3 erkennbar ist, aus einem Führungsblock 18 und einer Befestigungsplatte 19, an der wiederum das Trägerelement 11 befestigt ist.

In dem Trägerelement 11 sind im Ausführungsbeispiel zwei Reihen mit jeweils in gleichmäßigen Abständen zueinander angeordneten Durchgangsbohrungen 21, 22 ausgebildet. Die Anzahl und Anordnung der Durchgangsbohrungen 21, 22 richtet sich dabei nach den jeweils spezifischen Anforderungen. Insbesondere kann es auch vorgesehen sein, dass mehr oder weniger Reihen von Durchgangsbohrungen 21, 22 in dem Trägerelement 11 ausgebildet sind.

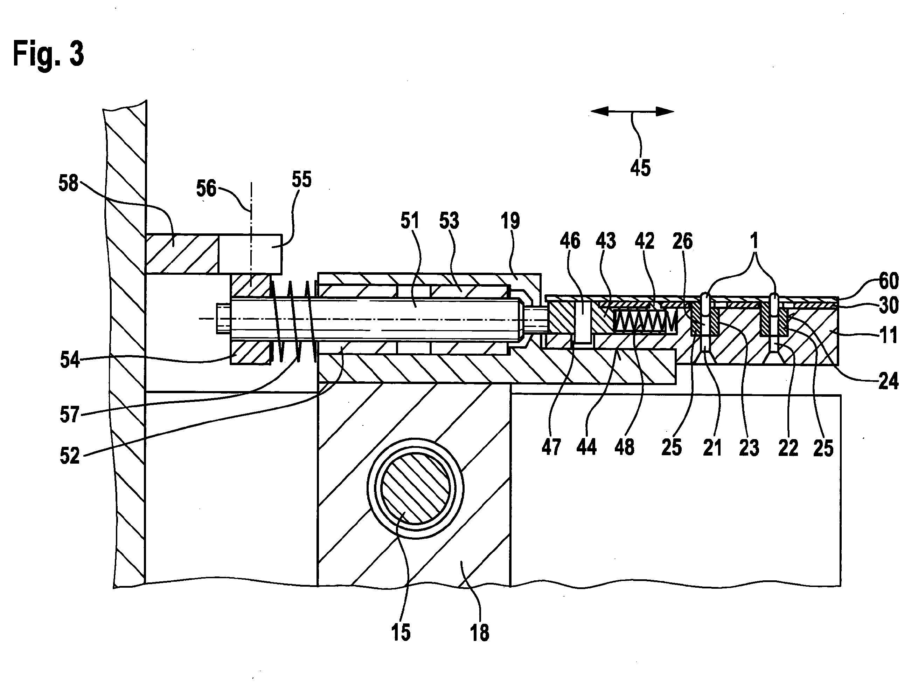

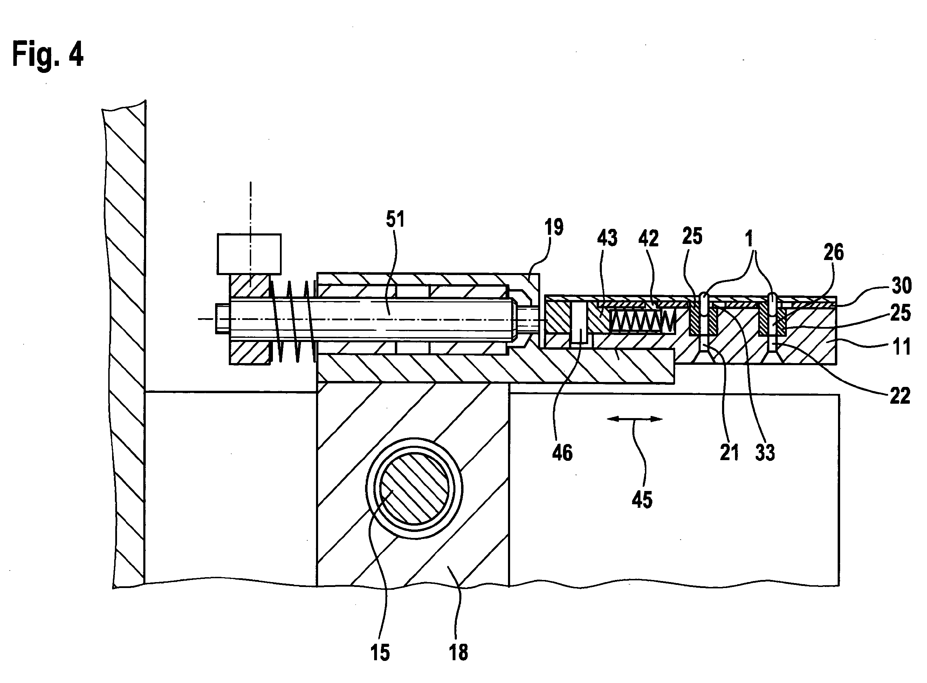

Während die Durchgangsbohrungen 21, 22 auf der Unterseite des Trägerelements 11 trichterförmig erweitert sind, sind auf der Oberseite der Trägerplatte 11 in Ausrichtung mit den Durchgangsbohrungen 21, 22 zwei nutartige Aufnahmekanäle 23, 24 ausgebildet, in die formatabhängige Aufnahmeleisten 25 für die Tabletten 1 einsetzbar sind. Die senkrecht zur Zeichenebene der Fig. 3 und 4 angeordneten Aufnahmeleisten 25 weisen wiederum Durchgangsbohrungen 26 auf, die fluchtend mit den Durchgangsbohrungen 21, 22 ausgerichtet sind. Die Aufnahmeleisten 25 weisen der Form der Tabletten 1 formschlüssig angepasste Aufnahmen 27 auf, die die Tabletten 1 in den Aufnahmeleisten 25 derart positionieren, dass die zu beschriftende Seitenfläche 2 der Tabletten 1 parallel zur Oberseite des Trägerelements 11 angeordnet ist und dieses überragt (Fig. 6). Für einen Formatwechsel ist es somit lediglich erforderlich, die Aufnahmeleisten 25 gegen ein anderes Format aufweisende Aufnahmeleisten 25 auszutauschen.

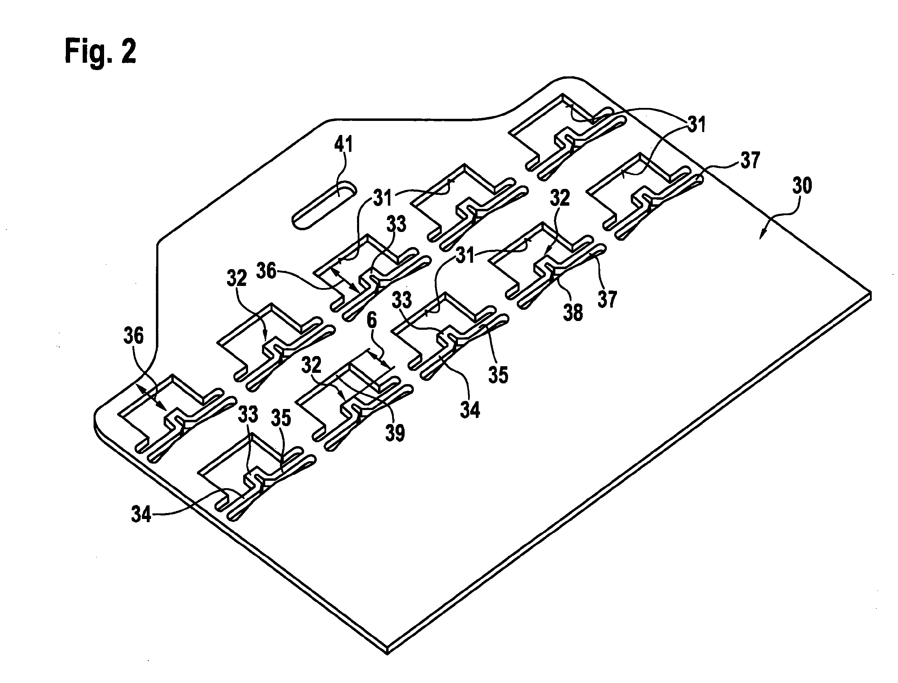

Auf der Oberseite des Trägerelements 11 ist ein Halteelement in Form einer Halteplatte 30 angeordnet. Die in der Fig. 2 näher dargestellte Halteplatte 30 weist in Ausrichtung mit den Aufnahmen 27 bzw. den Durchgangsbohrungen 21, 22 und 26 Durchbrüche in Form von Ausfräsungen 31 für jede Tablette 1 auf. Hierzu besteht die Halteplatte 30 beispielsweise in vorteilhafter Weise aus einem Kunststoffmaterial mit relativ geringer Dicke. Jeder Ausfräsung 31 ist ein ebenfalls durch eine Ausfräsung gebildetes Klemmelement 32 zugeordnet. Das Klemmelement 32 weist auf der der Tablette 1 zugewandten Seite eine Klemmnase 33 auf, die über zwei Verbindungsstege 34, 35 mit dem Grundkörper der Halteplatte 30 verbunden ist. Durch die Verbindungsstege 34, 35 wird eine in Richtung des Doppelpfeils 36 wirkende elastische Beweglichkeit der Klemmnase 33 erzielt. Um die Bewegung der Klemmnase 33 in der einen Richtung zu begrenzen, weist die auf der der Klemmnase 33 gegenüberliegenden Seite ausgebildete, schlitzförmige Ausfräsung 37 eine Anschlagfläche 38 auf. Wesentlich ist, dass die Breite b der Ausfräsungen 31 zwischen der Längsseite 39 der Ausfräsung 31 und der Klemmnase 33 eine derartige Größe aufweist, dass diese ein Einführen der Tabletten 1 in die Ausfräsungen 31 ermöglicht. Dabei sind auch die beiden Verbindungsstege 34, 35 von der Anschlagfläche 38 beabstandet. Zuletzt weist die Halteplatte 30 ein Langloch 41 auf, in das ein Vorsprung 42 eines Schiebers 43 eingreift, wie dies am besten anhand der Fig. 3 und 4 erkennbar ist.

Der Schieber 43 ist in einer Aufnahme 44 des Trägerelements 11 aufgenommen und in Richtung des Doppelpfeils 45 bewegbar. In eine Durchgangsbohrung des Schiebers 43 ist ein Anschlagstift 46 eingepresst, dessen unteres Ende in ein Langloch 47 eingreift, das in dem Trägerelement 11 ausgebildet ist. Durch den Anschlagstift 46 wird somit der Verstellbereich des Schiebers 43, und damit auch der Verstellbereich der Halteplatte 30 in Richtung des Doppelpfeils 45 begrenzt. Der Schieber 43 ist weiterhin in Wirkverbindung mit einer Druckfeder 48 angeordnet, die den Schieber 43 und damit auch die Halteplatte 30 mit Federkraft beaufschlagt, derart, dass die Halteplatte 30 in Richtung der Befestigungsplatte 19 gedrückt wird und somit die Tabletten 1 von der Halteplatte 30 bzw. den Klemmelementen 32 in den Ausfräsungen 31 positioniert bzw. fixiert sind.

Das der Druckfeder 48 abgewandte Ende des Schiebers 43 wirkt mit einem Druckbolzen 51 zusammen, der in der Befestigungsplatte 19 in zwei Lagern 52, 53 ebenfalls in Richtung des Doppelpfeils 45 beweglich angeordnet ist. Das aus der Befestigungsplatte 19 heraustretende Ende der Druckbolzen 51 ist mit einer Leiste 54 verbunden, an deren Oberseite in etwa mittig eine Rolle 55 in einer Achse 56 drehbar gelagert ist. Mittels einer weiteren Druckfeder 57 wird der Druckbolzen 51 in die dem Schieber 43 entgegengesetzte Richtung gedrückt.

Die Rolle 55 wirkt mit einer, beispielhaft in der Fig. 1 dargestellten Führungsschiene 58 als Gegenelement zusammen, die am Gestell 59 der Verpackungsanlage 100 ortsfest angeordnet ist.

Die Halteplatte 30 ist aus der dem Trägerelement 11 abgewandten Seite von einer Deckplatte 60 überdeckt, die wiederum mit dem Trägerelement 11 verbunden ist. Die Deckplatte 60 weist Durchbrüche 61 auf, die mit den Ausfräsungen 31 derart ausgerichtet sind, dass die Tabletten 1 mit ihrer Seitenfläche 2 über die Deckplatte 60 hinausragen, wobei die Durchbrüche 61 die Tablette 1 bzw. die Seitenfläche 2 bevorzugt mit Abstand umgeben.

Die soweit beschriebene Einrichtung 10 arbeitet wie folgt: Zum Ein- bzw. Ausschleusen der Tabletten 1 in das Trägerelement 11 ist es erforderlich, dass sich die Halteplatte 30 in einer ersten Stellung befindet, in der diese nicht mit den Tabletten 1 zusammenwirkt bzw. diese nicht in den Aufnahmen 27 hält. Hierzu ist es entsprechend den Fig. 1 und 3 vorgesehen, dass über den Druckbolzen 51, der über die Rolle 55 in Wirkverbindung mit der Führungsschiene 58 entgegen der Federkraft der Druckfeder 57 kraftbeaufschlagt ist, der Schieber 43 in Richtung der Aufnahmen 27 gedrückt wird, wodurch die Halteplatte 30 eine Position einnimmt, in der die Tabletten 1 in die Aufnahmen 27 der Aufnahmeleisten 25 eingesetzt werden können, ohne dass diese in Wirkverbindung mit den Klemmnasen 33 der Halteplatte 30 sind. Anschließend wird, nachdem das Trägerelement 11 entsprechend dem Pfeil 17 aus dem Bereich der Führungsschiene 58 gelangt ist, die Halteplatte 30 infolge der Federkraft der Druckfeder 48 in ihre zweite, die Tabletten 1 in den Aufnahmen 27 fixierende Position gebracht. Dies erfolgt dadurch, dass der Druckbolzen 51 außerhalb der Führungsschiene 58 mittels der weiteren Druckfeder 57 außer Kontakt mit dem Schieber 43 gelangt, so dass die Halteplatte 30 und somit auch die Klemmnasen 33 mittels der Druckfeder 48 in Richtung der Befestigungsplatte 19 bewegt wird. In dieser Position können die Tabletten 1 insbesondere der Beschriftungsstation (nicht dargestellt) zugeführt werden, wobei durch den Klemmschluss zwischen der Klemmplatte 30 bzw. den Klemmnasen 33 und den Tabletten 1 eine genaue Positionierung zum Beschriften der Seitenflächen 2 der Tabletten 1 ermöglicht wird. Nach dem Beschriften der Tabletten 1 gelangt das Trägerelement 11 anschließend in Wirkverbindung mit einer weiteren Führungsschiene 58, die die Halteplatte 30 bzw. die Klemmnasen 33 wieder in die erste Stellung verbringen. Zum Ausschieben der Tabletten 1 aus den Aufnahmen 27 des Trägerelements 11 sind im Bereich einer nicht dargestellten Anschlussstation Ausschubstößel 65 angeordnet (Fig. 6), die in die Durchgangsbohrungen 21, 22, 26 des Trägerelements 11 und der Aufnahmeleisten 25 einfahren und durch Anlagekontakt mit den Tabletten 1 diese aus den Aufnahmen 27 ausschieben.

Die soweit beschriebene Einrichtung 10 kann in vielfältiger Art und Weise abgewandelt bzw. modifiziert werden, ohne vom Erfindungsgedanken abzuweichen.

## Patentansprüche

1. Einrichtung (10) zum Halten und Positionieren von als Tabletten, Hartgelatinekapseln o.ä. ausgebildeten pharmazeutischen Produkten (1) in einer Verpackungsanlage (100), mit einem Trägerelement (11), das eine Vielzahl von formatabhängigen Aufnahmen (27) für die Produkte (1) aufweist, wobei das Trägerelement (11) an einer Fördereinrichtung (12) der Verpackungsanlage (100) vorzugsweise austauschbar befestigbar ist,
**dadurch gekennzeichnet,**
**dass** in Wirkverbindung mit dem Trägerelement (11) ein Halteelement (30) vorgesehen ist, das für jedes Produkt (1) in Ausrichtung mit der jeweiligen Aufnahme (27) jeweils ein Klemmelement (32) aufweist, und dass das Halteelement (30) in Bezug zum Trägerelement (11) zwischen zwei Stellungen beweglich angeordnet ist, derart, dass in einer ersten Stellung zum Ein- und Ausschleusen der Produkte (1) in bzw. aus den Aufnahmen (27) die Klemmelemente (32) außer Kontakt mit den Produkten (1) sind, und dass in einer zweiten Stellung die Klemmelemente (32) die Produkte (1) in den Aufnahmen (27) fixieren.

2. Einrichtung nach Anspruch 1,
**dadurch gekennzeichnet,**
**dass** das Halteelement als Halteplatte (30) ausgebildet ist, und dass die Klemmelemente (32) über Verbindungsstege (43, 35) einstückig mit der Halteplatte (30) verbunden sind, wobei die Klemmelemente (32) durch Ausfräsungen (31, 37) ausgebildet sind und Klemmabschnitte (33) aufweisen.

3. Einrichtung nach Anspruch 2,
**dadurch gekennzeichnet,**
**dass** die Halteplatte (30) auf der dem Trägerelement (11) abgewandten Seite von einer Deckplatte (60) überdeckt ist, die mit dem Trägerelement (11) zumindest mittelbar verbunden ist, und dass in der Deckplatte (60) in Ausrichtung mit den Aufnahmen (27) Durchbrüche (61) für die Produkte (1) ausgebildet sind, die die Produkte (1) bevorzugt mit Abstand umgeben.

4. Einrichtung nach einem der Ansprüche 1 bis 3,
**dadurch gekennzeichnet,**
**dass** die formatabhängigen Aufnahmen (27) in Formatleisten (25) ausgebildet sind, die in Aufnahmen (23, 24) des Trägerelements (11) einsetzbar sind.

5. Einrichtung nach einem der Ansprüche 1 bis 4,
**dadurch gekennzeichnet,**
**dass** die Aufnahmen (27) Durchbrüche bzw. Durchgangsbohrungen (26) aufweisen, und dass in die Durchbrüche bzw. Durchgangsbohrungen (26) Ausschubstößeln (65) einführbar sind, die im Bereich einer Anschlussstation der Verpackungsanlage (100) angeordnet sind, und dabei die Produkte (1) aus den Aufnahmen (27) ausschieben.

6. Einrichtung nach einem der Ansprüche 1 bis 5,
**dadurch gekennzeichnet,**
**dass** das Halteelement (30) mit einem Federelement (48) zusammenwirkt, das das Halteelement (30) in Richtung der zweiten Stellung kraftbeaufschlagt.

7. Einrichtung nach einem der Ansprüche 1 bis 6,
**dadurch gekennzeichnet,**
**dass** das Halteelement (30) mit einem Übertragungselement (51) zusammenwirkt, mittels dem das Halteelement (30) in die erste Stellung bewegbar ist.

8. Einrichtung nach Anspruch 7,
**dadurch gekennzeichnet,**
**dass** das Übertragungselement (51) mit einem im Bereich der Verpackungsanlage (100) angeordneten, vorzugsweise ortsfesten Gegenelement (58) zusammenwirkt.

9. Einrichtung nach einem der Ansprüche 3 bis 8,
**dadurch gekennzeichnet,**
**dass** die Produkte (1) auf der dem Trägerelement (11) abgewandten Seite über die Deckplatte (60) hinausragen.

10. Einrichtung nach einem der Ansprüche 1 bis 9,
**dadurch gekennzeichnet,**
**dass** das Halteelement (30) mit einem Anschlagelement (46) zusammenwirkt, das den Verstellbereich des Halteelements (30) zwischen den beiden Positionen begrenzt.

## Claims

1. Apparatus (10) by means of which pharmaceutical products (1) in the form of tablets, hard gelatin capsules or the like are retained, and positioned, in a packaging installation (100), with a carrier element (11) which has a multiplicity of format-dependent holders (27) for the products (1), wherein the carrier element (11) can be fastened, preferably exchangeably, on a conveying apparatus (12) of the packaging installation (100), **characterized in that** a retaining element (30) is provided in operative connection with the carrier element (11), which retaining element has, for each product (1), a respective clamping element (32) in alignment with the respective holder (27), and **in that** the retaining element (30) is arranged movably between two positions in relation to the carrier element (11) such that, in a first position, in order for the products (1) to be introduced into the holders (27) or discharged therefrom, the clamping elements (32) are not in contact with the products (1), and that, in a second position, the clamping elements (32) fix the products (1) in the holders (27).

2. Apparatus according to Claim 1, **characterized in that** the retaining element is designed as a retaining plate (30), and **in that** the clamping elements (32) are integrally connected to the retaining plate (30) via connecting webs (43, 35), wherein the clamping elements (32) are formed by cutouts (31, 37) and have clamping portions (33).

3. Apparatus according to Claim 2, **characterized in that** the retaining plate (30) is covered, on the side facing away from the carrier element (11), by a cover plate (60) which is connected at least indirectly to the carrier element (11), and **in that** apertures (61) for the products (1) are formed in the cover plate (60) in alignment with the holders (27), which apertures surround the products (1) preferably at a distance.

4. Apparatus according to one of Claims 1 to 3, **characterized in that** the format-dependent holders (27) are configured in format strips (25), which can be inserted into holders (23, 24) of the carrier element (11).

5. Apparatus according to one of Claims 1 to 4, **characterized in that** the holders (27) have apertures or through-bores (26), and **in that** discharge rams (65), which are arranged in the area of an adjoining station of the packaging installation (100), can be inserted into the apertures or through-bores (26) and thereby push the products (1) out of the holders (27).

6. Apparatus according to one of Claims 1 to 5, **characterized in that** the retaining element (30) interacts with a spring element (48), which applies force to the retaining element (30) in the direction of the second position.

7. Apparatus according to one of Claims 1 to 6, **characterized in that** the retaining element (30) interacts with a transmission element (51), by means of which the retaining element (30) is movable to the first position.

8. Apparatus according to Claim 7, **characterized in that** the transmission element (51) interacts with a preferably stationary counter-element (58), which is arranged in the area of the packaging installation (100).

9. Apparatus according to one of Claims 3 to 8, **characterized in that** the products (1) protrude from the cover plate (60) on the side facing away from the carrier element (11).

10. Apparatus according to one of Claims 1 to 9, **characterized in that** the retaining element (30) interacts with a stop element (46), which delimits the adjustment range of the retaining element (30) between the two positions.

## Revendications

1. Equipement (10) destiné à retenir et positionner des produits pharmaceutiques (1) prenant la forme de comprimés, de capsules de gélatine dure ou similaires dans une installation de conditionnement (100), comprenant un élément de support (11) qui présente une pluralité de logements (27) dépendant du format pour les produits (1), l'élément de support (11) pouvant être fixé de préférence de manière remplaçable à un équipement de transport (12) de l'installation de conditionnement (100),
**caractérisé en ce**
**qu'**un élément de retenue (30) en liaison fonctionnelle avec l'élément de support (11) est prévu, lequel présente, pour chaque produit (1), en alignement avec le logement respectif (27), à chaque fois un élément de serrage (32), et en ce que l'élément de retenue (30) est disposé de manière déplaçable entre deux positions par rapport à l'élément de support (11), de telle sorte que, dans une première position pour l'insertion et l'éjection des produits (1) dans ou hors des logements (27), les éléments de serrage (32) soient amenés hors de contact avec les produits (1), et en ce que, dans une deuxième position, les éléments de serrage (32) fixent les produits (1) dans les logements (27).

2. Equipement selon la revendication 1,
**caractérisé en ce que**
l'élément de retenue est réalisé sous forme de plaque de retenue (30) et **en ce que** les éléments de serrage (32) sont connectés d'une seule pièce à la plaque de retenue (30) par le biais de nervures de liaison (43, 35), les éléments de serrage (32) étant réalisés par des évidements produits par fraisage (31, 37) et présentant des portions de serrage (33).

3. Equipement selon la revendication 2,
**caractérisé en ce que**
la plaque de retenue (30), du côté opposé à l'élément de support (11), est recouverte par une plaque de recouvrement (60) qui est connectée au moins indirectement à l'élément de support (11), et **en ce que** dans la plaque de recouvrement (60), en alignement avec les logements (27), sont réalisés des perçages (61) pour les produits (1), qui entourent les produits (1) de préférence à distance de ceux-ci.

4. Equipement selon l'une quelconque des revendications 1 à 3,
**caractérisé en ce que**
les logements (27) dépendant du format sont réalisés dans des bandes de format (25) qui peuvent être insérées dans des logements (23, 24) de l'élément de support (11).

5. Dispositif selon l'une quelconque des revendications 1 à 4,
**caractérisé en ce que**
les logements (27) présentent des perçages ou des alésages de passage (26) et **en ce que** dans les perçages ou les alésages de passage (26) peuvent être introduits des poussoirs d'éjection (65) qui sont disposés dans la région d'un poste de raccordement de l'installation de conditionnement (100), et qui repoussent ainsi les produits (1) hors des logements (27).

6. Equipement selon l'une quelconque des revendications 1 à 5,
**caractérisé en ce que**
l'élément de retenue (30) coopère avec un élément de ressort (48) qui sollicite par force l'élément de retenue (30) dans la direction de la deuxième position.

7. Equipement selon l'une quelconque des revendications 1 à 6,
**caractérisé en ce que**
l'élément de retenue (30) coopère avec un élément de transfert (51) au moyen duquel l'élément de retenue (30) peut être déplacé dans la première position.

8. Equipement selon la revendication 7,
**caractérisé en ce que**
l'élément de transfert (51) coopère avec un élément conjugué (58) de préférence fixe, disposé dans la région de l'installation de conditionnement (100).

9. Equipement selon l'une quelconque des revendications 3 à 8,
**caractérisé en ce que**
les produits (1) dépassent de la plaque de recouvrement (60) du côté opposé à l'élément de support (11).

10. Equipement selon l'une quelconque des revendications 1 à 9,
**caractérisé en ce que**
l'élément de retenue (30) coopère avec un élément de butée (46) qui limite la plage de déplacement de l'élément de retenue (30) entre les deux positions.
